Europäisches Patentamt

European Patent Office

Office européen des brevets

(19)

(11) Publication number: 0 358 195

A2

# (12) EUROPEAN PATENT APPLICATION

(21) Application number: 89116445.1

(22) Date of filing: 06.09.89

(51) Int. Cl.5: C08F 259/08 , A61K 6/083 , //(C08F259/08,220:12)

(30) Priority: 06.09.88 JP 222762/88
06.09.88 JP 222763/88
06.09.88 JP 222764/88
29.12.88 JP 332345/88
29.12.88 JP 332346/88

(43) Date of publication of application:
14.03.90 Bulletin 90/11

(84) Designated Contracting States:
DE FR GB IT

(71) Applicant: DAIKIN INDUSTRIES, LIMITED
Umeda Center Building 4-12, Nakazaki-nishi
2-chome Kita-ku
Osaka-shi Osaka-fu(JP)

(72) Inventor: Imai, Yohji
22-14, Nobuto, 1-chome
Chiba-shi Chiba-ken(JP)
Inventor: Kadoma, Yoshinori
15-3-209, Higashiyama, 2-chome Meguro-ku
Tokyo-to(JP)
Inventor: Tatemoto, Masayoshi
13-5, Yanagawa-cho, 2-chome
Takatsuki-shi Osaka-fu(JP)
Inventor: Yagi, Toshiharu
3-26, Honmachi, 8-chome
Toyonaka-shi Osaka-fu(JP)
Inventor: Tanaka, Yoshito
21-21, Hitotsuya, 2-chome
Settsu-shi Osaka-fu(JP)
Inventor: Noguchi, Tsuyoshi
21-21, Hitotsuya, 2-chome
Settsu-shi Osaka-fu(JP)
Inventor: Tsuda, Nobuhiko
21-21, Hitotsuya, 2-chome
Settsu-shi Osaka-fu(JP)

(74) Representative: Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
D-8000 München 40(DE)

(54) Solid high polymer substance, process and use thereof.

(57) A solid high polymer substance obtained by dissolving in an acrylic monomer an amorphous fluorine-containing polymer soluble in the acrylic monomer, and subsequently subjecting the monomer tc polymerization, or further forming an interpenetrating polymer network.

## Fig. 1

G 801

Temp (°C)

## Solid high polymer substance, process and use thereof

The present invention relates to solid high polymer substances, process and use thereof.

A method is already known of preparing high polymer substances by injecting a monomer or prepolymer into a high polymer substance and subsequent polymerization. For example, JP-A-62-33524 discloses that a monomer or prepolymer is injected into substituted polyacetylene, followed by polymerization. JP-A-62-235318 discloses a method wherein a monomer having added thereto a crosslinking agent for forming a three-dimensional structure is added to a polymer having a three-dimensional structure, and the mixture is made into a three-dimensional structure. Thus, it is known to subject a polymer to a polymerization reaction with a monomer incorporated therein, whereas nothing is known about such a reaction wherein amorphous fluorine-containing polymer is used.

Further, dental base materials include liner materials, denture base materials, tissue conditioners etc. Although various materials have heretofore been used for liners for use as affixed to denture bases to mitigate the occlusal pressure to be applied to the membrane surface of the denture base, the conventional materials are still unsatisfactory. Further various tissue conditioners are commercially available for use in curing the inflammation of the tunica mucosa oris due to the incompatibility of the denture base with the membrane, whereas they are usable only for a short period of time and still remain to be improved. Presumably, the reason is that the material is great in water absorption and low in adhesion to the denture base, undergoes changes in physical properties due to dissolving-out of the plasticizer or the like and becomes degraded with time.

An object of the invention is to provide a solid high polymer substance, and process for preparing the same, the substance being useful as various molding materials and particularly as later-mentioned highly functional materials.

Another object of the present invention is to provide a dental base material which is exceedingly small in water absorption and highly adhesive to denture bases, etc., and is usable for a prolonged period of time with good stability.

The above and other objects of the invention will become apparent from the following description.

The present invention provides a solid high polymer substance obtained by dissolving in an acrylic monomer an amorphous fluorine-containing polymer soluble in the acrylic monomer, and subsequently subjecting the monomer to polymerization, or further forming an interpenetrating polymer network.

The present invention also provides a process for preparing the above solid high polymer substance and a dental base material obtained form the substance.

The solid high polymer substance obtained by the invention is amorphous and contains an extremely small amount of residual acrylic monomer and is useful as a dental base material, for example, for denture bases, liners, repair agents therefor, denture stabilizers and tissue conditioners, and also as a material for contact lenses, intraocular implants and the like.

The fluorine-containing polymer to be used in the present invention is an amorphous fluorine-containing polymer which is soluble in an acrylic monomer. Examples of such polymers are vinylidene fluoride copolymers such as vinylidene fluoride/hexafluorpropylene, vinylidene fluoride/tetrafluorethylene/hexafluorpropylene and vinylidene fluoride/chlorotrifluoroethylene copolymers; tetrafluorethylene/propylene, hexafluoropropylene/ethylene, fluoro(alkyl vinyl ether) (including those having a multiple ether bonds)/olefin type copolymers; fluorosilicon and fluorophosphazene type polymers. Among some of these polymers, those having an iodine atom or bromine atom bonded to the polymer chain thereof (see, for example, JP-A-53-125491 and JP-A-59-20310, and JP-B-53 -4115) are highly amenable to polymerization reaction and are therefore desirable.

In the present invention, the fluorine-containing polymer soluble in an acrylic monomer means that soluble easily in the monomer at room temperature. The amorphous flourine-containing polymer means that having no substantial melting point in a peak of DSC (Differential Scanning Colorimeter). By satisfying the above both requirements, the contemplated solid high polymer substance can be obtained which is homogeneous and contains a small amount of residual acrylic monomer.

Acrylic monomers useful for the present invention are not limited in kind and include mono- and polyfunctional monomers. The monomer is used singly or in a mixture of at least two of them. The polyfunctional monomer is preferably used in a small amount, conjointly with the monofunctional monomer. Examples of preferred monomers are methyl methacrylate (MMA), ethyl methacrylate (EMA), butyl methacrylate (BMA), 2-hydroxyethyl methacrylate (HEMA), 3-(trimethoxysilyl)propyl methacrylate (MSPM), 2-(phenylphosphoryl)ethyl methacrylate (phenyl-P), 2-hydroxy-3-(β-napthoxy)propyl methacrylate (HNPM), N-phenyl-N-(2-hydroxy-3-methacryloxy)propylglycine (NPG-GMA), ethylene glycol dimethacrylate (EDMA or

2

1G), diethylene glycol dimethacrylate (DiEDMA), triethylene glycol dimethacrylate (TriEDMA), 1,4-butanediol dimethacrylate (1,4-BuDMA), 1,3-butanediol dimethacrylate (1,3-BuDM A), 2,2-bis[4-(2-hydroxy-3-methacryloxypropoxy)phenyl]propane (Bis-GMA), 2,2-bis(4-methacryloxy phenyl)propane (BPDMA), 2,2-bis-(4-methacryloxyethoxyphenyl)propane (Bis-MEPP), 2,2-bis(4-methacryloxypolyethoxyphenyl)propane (Bis-MPEPP), di(methacryloxyethyl)trimethylhexamethylenediurethane (UDMA), trimethylol-propanetrimethacrylate (TMPT),

$CH_2 = C(CH_3)COOCH_2CF_3$ (3FMA),

$CH_2 = C(CH_3)COOCH_2CF_2CF_2H$ (4FMA),

$CH_2 = C(CH_3)COOCH_2CF_2CF_3$ (5FMA),

$CH_2 = C(CH_3)COOCH_2(CF_2)_2CF_3$ (7FMA),

$CH_2 = C(CH_3)COOCH_2(CF_2)_3CF_2H$ (8FMA),

acrylates and $\alpha$-fluoroacrylates corresponding to such compounds.

Examples of $\alpha$-fluoroacrylates are

$CH_2 = CFCOOCH_2CF_2CF_2H$ (4FFA),

$CH_2 = CFCOOCH_2CF_2CF_3$ (5FFA),

$CH_2 = CFCOOCH_2(CF_2)_3CF_2H$ (8FFA) and

$CH_2 = CFCOOCH_2(CF_2)_5CF_2H$ (12FFA).

According to the invention, the fluorine-containing polymer is dissolved in such an acrylic monomer, and the solution is then subjected to polymerization, whereby the desired solid high polymer substance is prepared. The polymerization is conducted in the presence of a polymerization initiator. A polymerization inhibitor, reducing agent, transfer agent, etc. can be added to the polymerization system. Examples of useful polymerization initiators are light, heat, benzoyl peroxide, azoisbutyronitrile (AIBN), camphorquinone (CQ), 9-fluorenone, tributylborane (TBB), benzophenone and the like. Examples of useful reducing agents are dimethylaminoethyl methacrylate (DMAEMA), dimethyl-p-toluidine (DMPT) and the like. Examples of useful polymerization inhibitors are hydroquinone, hydroquinone methyl ester and the like. Examples of useful transfer agents include lauryl mercaptan.

When heat polymerization is resorted to, it is desirable to heat the solution at a temperature of about 55 to about 100°C for abourt 10 to about 150 minutes. When to be subjected to photopolymerization, the solution is preferably irradiated with visible ray or ultraviolet ray for several minutes to tens of minutes.

The substances of the present invention include those obtained by forming such a high polymer substance into an IPN (interpenetrating polymer network). IPN is a polymer obtained by mixing two linear polymers together each in the form of a liquid (or solution) and crosslinking one or both of the polymers to interlock the respective molecular chains. This method is utilized in the present invention as modified into several different methods. According to a first method, a polymer substance is first made into a film, a monomer serving as a guest polymer is injected in the state of vapor phase into the film, or the film is immersed in a solution of the monomer to inject the monomer into the film, and the film is thereafter polymerized or crosslinked as by heating or irradiation with light. A second method, like the usual IPN forming method, comprises dissolving a high polymer substance in a suitable solvent, admixing a guest component with the solution for reaction, casting the resulting solution into a film, and heat-treating the film when so required. Other methods are also usable.

For the formation of IPN, crosslinking must be effected. This can be accomplished, for example, by using as the fluorine-containing polymer such a compound having an iodine atom or bromine atom bonded to the polymer chain thereof, or by using as the acrylic monomer at least bifunctional monomer, or by using a crosslinking agent.

For this purpose, the fluorine-contaning polymers and acrylic monomers already exemplified are usable. Useful crosslinking agents include, for example, triallyl isocyanurate, triallyl cyanurate, triacryl formal, triallyl trimellitate, diallyl phthalale and like poly-unsaturated compounds.

The solid high polymer substance of the invention is useful as various molding materials, and particularly useful as a dental base material which is exceedingly small in water absorption and highly adhesive to denture base, etc., and is usable for a prolonged period of time with good stability. Further, the substance is excellent in transparency, impact resistance, dimensional stability and affinity for the living body, so that it is useful as a highly functional material such as medical materials, optical materials, separation film and membranes. When the present substance is to be placed into actual use, various additives can be admixed with the substance which include fillers, pigments, surface modifying agents, electrically conductive substances and the like.

The solid high polymer substance obtained by the invention contains an extremely small amount of residual acrylic monomer although the reason still remains to be clarified. Especially when the fluorine-containing polymer is used in amounts exceeding the amount of the monomer, the substance obtained

3

either by heat polymerization or by photopolymerization is free from any residual monomer and the substance obtained by polymerization at room temperature contains only 0.2% of residual monomer, whereas when polymethyl methacrylate is polymerized as dissolved in methyl methacrylate, the residual monomer content is 0.5% for heat polymerization, 2.4% for photopolymerization and 3.8% for polymerization at room temperature. The solid high polymer substance of the invention is thus free from or almost free from detectable residual monomer and is therefore useful as a dental base material, for example, for denture bases, liners, repair agents therefor, denture stabilizers and tissue conditioners, and also as a material for contact lenses, intraocular implants and the like.

The solid high polymer substance of the invention is used as a dental base material, for example, in the following manner. The desired fluorine-containing polymer and acrylic monomer are kneaded together at room temperature to obtain a patty-like mixture, which is then applied as a liner to the rear side of a denture base molded with gypsum within a flask and then heated with application of pressure by the usual method. This procedure affords a denture base lined with the high polymer substance. The denture thus lined with the present substance has exceedingly higher stability than those having the conventional liner affixed thereto.

The invention will be desdribed with reference to the following examples and comparative examples, in which the parts and percentages are by weight.

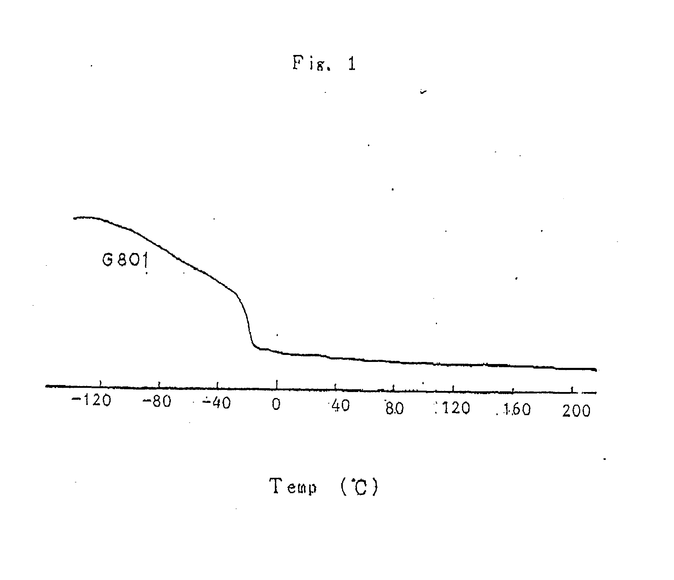

Fig. 1 shows a DSC chart of G801 at a temperature elevation speed of 20°C/min.

Examples 1 to 12

Solution of fluorine-containing polymer and monomer in the proportions listed in Table 1 were each polymerized under the following conditions.

With reference to the table, the symbol "G801" represents an iodine-containing copolymer of two monomers, i.e. vinylidene fluoride and hexafluoropropene (6 F), under the brand name of Dai-el® G801, and the symbol "MMA" represents methyl methacrylate. Fig. 1 shows a DSC chart of G801 at a temperature elevation speed of 20°C/min. The chart reveals that G801 has a glass transition temperature but has no melting point. The present fluorine-containing polymer, for example, G801 was dissolved in acrylic monomer in such that 20g of G801 in the form of 5mm×5mm was added to 10g of MMA having dissolved therein polymerization initiator etc. and the mixture was allowed to stand at 25°C for one day.

(1) Heat polymerization

The solution was subjected to heat polymerization at 55°C for 60 minutes and then at 100°C for 60 minutes, with addition of 5 mg of benzoyl peroxide (BPO) per gram of the fluorine-containing polymer when the proportion of this polyemr was 50 to 77%, or with addition of BPO in an amount of 0.5% of the amount of the monomer when the proportion of the fluorine-containing polymer was 20 to 30%.

(2) Photopolymerization

The solution was held between a pair of glass plates spaced apart by a spacer, 0.5mm or 3.8mm in thickness, and subjected to polymerization with use of visible ray irradiator ("α-light", product of J. Morita Corp.), with addition of 5mg of each of CQ and DM AEMA per gram of the fluorine-containing polymer when the proportion of the polymer was 50 to 77%, or CQ and DMAEMA each in an amount of 0.5% of the amount of the monomer when the fluorine-containing polymer was used in a proportion of 20 to 30%. The solution was irradiated with the light for 12 to 30 minutes in accordance with the proportion of the fluorine-containing polymer used.

The number average molecular weight ($\overline{M}n$) of the solid high polymer substance obtained according to the invention was determined by gel permeation chromatography (G PC) using polystyrene as a standard substance. The residual monomer content of the high polymer substance was determined by gas chromatography after extraction with methanol for one week,

4

Table 1

| | Fluorine-containing polymer | Monomer | | | |
|---|---|---|---|---|---|
| Ex. | G801 | MMA | Polyn. | $\overline{M}n$ | Monomer remained (%) |
| 1 | 77% | 23% | A | 64,000 | 0 |
| 2 | 77% | 23% | B | 45,000 | 0 |
| 3 | 71% | 29% | A | 64,000 | 0 |
| 4 | 71% | 29% | B | 46,000 | 0 |
| 5 | 63% | 37% | A | 63,000 | 0 |
| 6 | 63% | 37% | B | 44,000 | 0 |
| 7 | 56% | 44% | A | 64,000 | 0 |
| 8 | 56% | 44% | B | 42,000 | 0 |
| 9 | 50% | 50% | A | 63,000 | 0 |
| 10 | 50% | 50% | B | 42,000 | 0.7 |
| 11 | 30% | 70% | B | 45,000 | 2.3 |
| 12 | 20% | 80% | B | 46,000 | 5.7 |
| Note) | | | | | |
| A : Heat polymerization | | | | | |
| B : Photopolymerization | | | | | |

## Examples 13 to 16 and Comparative Examples 1 to 3

Solid high polymer substances were prepared in the same manner as in Example 1 with the exception of using the polyemr and the monomer listed in Table 2, which also shows the results achieved. The symbol "G701" listed in the table represents a copolymer of two monomers, i.e. vinylidene fluoride and hexafluoropropene (6 F), under the brand name of Dai-el® G701. For Comparative Examples 1 to 3, the same procedure as above was repeated except that polymethyl methacrylate (P MMA) was used as the starting polymer. Table 2 also shows the result.

Table 2

| | Polymer | | Monomer | | | |
|---|---|---|---|---|---|---|
| Ex. | G701 | PMMA | MMA | Polyn. | $\overline{M}n$ | Monomer remained (%) |
| 13 | 71% | | 29% | A | 57,000 | 0 |
| 14 | 71% | | 29% | B | 30,000 | 0 |
| 15 | 50% | | 50% | A | 53,000 | 0 |
| 16 | 50% | | 50% | B | 32,000 | 0.9 |
| Com.Ex. | | | | | | |
| 1 | | 71% | 29% | A | 120,000 | 0.5 |
| 2 | | 71% | 29% | B | 98,000 | 2.4 |
| 3 | | 50% | 50% | B | 96,000 | 3.3 |
| Note) | | | | | | |
| A : Heat polymerization | | | | | | |
| B : Photopolymerization | | | | | | |

5

Examples 17 to 26

Two grams of the fluorine-containing polymer and 2.8×10⁻³ mole of the monomer listed in Table 3, 6mg of CQ and 6mg of DMAEMA were thoroughly mixed together in a constant-temperature chamber at 50 to 60°C to obtain a solution, which was then subjected to photopolymerization (irradiation time : 12 minutes) in the same manner as in Example 1. The characteristics of the solid high polymer substance obtained were determined by the following methods. For comparison, the following commercially available soft liners for denture base were checked for characteristics in the same manner.
Kurepeet Dough and Kurepeet (products of Kureha Chemical Industry Co., Ltd.)
Neo Snugger (product of Neo Dental Chemical Products Co., Ltd.)

(1) Contact angle

The sample, which was smooth-surfaced, was cleaned with hexane over the surface, a 10-$\mu l$ quantity of distilled water was dropped onto the surface at room temperature, and the contact angle was measured 30 seconds later. The average value for five different portions was obtained.

(2) Hardness (Shore hardness)

The hardness of 3.8-mm-thick samples was measured at room temperature. The average value of three different portions was obtained.

(3) Water absorption

A sample, 5×5×0.5mm, was prepared, then dried in a vacuum to a constant weight, immersed in distilled water at 37°C for 3 weeks and 10 weeks, thereafter checked for the weight and dried in a vacuum again to a constant weight, which was measured.
Water absorption (%) due to 3-week immersion

$$= \frac{A - B}{C} \times 100$$

wherein A is the wet weight after immersion, B is the dry weight after immersion and the subsequent drying, and C is the dry weight immediately before immersion.

(4) Tensile strength at break ($T_B$) and elongation

Measured using an autograph at a drawing speed of 100mm/min.
The symbol "G901" listed in Table 3 represents an iodine-containing copolymer of three monomers, i.e. vinylidene fluoride, tetrafluoroethylene (4F) and 6F, under the brand name of Dai-el® G901. In Examples 19 and 20, 1000ppm of hydroquinone (HQ) was further added.

Table 3

| Ex. | Polymer | Monomer | $\overline{M}n$ | Monomer remained (%) | Contact angle (degree) | Hardness | Water absorption(%) | | $T_B$ (kg/cm$^2$) | Elongation(%) |
|---|---|---|---|---|---|---|---|---|---|---|
| | | | | | | | 3 W | 10W | | |
| 17 | G801 | 3FMA | 39,000 | 0 | 91.6 | 52 | 1.35 | 3.88 | 73 | 5.3 |
| 18 | G901 | 3FMA | 47,000 | 0.80 | 92.6 | 64 | 1.55 | 3.47 | 81 | 7.1 |
| 19 | G801 | 5FMA | 22,500 | 0.35 | 95.8 | 39 | 0.84 | 3.04 | 34 | 5.8 |
| 20 | G901 | 5FMA | 34,000 | 0 | 97.2 | 71 | 1.54 | 3.61 | 103 | 3.8 |
| 21 | G801 | 5FMA | 23,000 | 0 | 95.2 | 47 | - | - | - | - |
| 22 | G901 | 5FMA | 33,000 | 0 | 96.2 | 63 | - | - | - | - |
| 23 | G801 | 7FMA | 22,000 | 0.15 | 99.4 | 54 | 1.17 | 2.96 | 30 | - |
| 24 | G901 | 7FMA | 31,000 | 0 | 105.0 | 69 | 1.43 | 3.51 | 73 | 4.6 |
| 25 | G801 | 8FMA | 22,000 | - | 90.0 | 46 | 2.29 | - | - | - |
| 26 | G901 | 8FMA | 32,000 | - | 93.0 | 49 | 2.40 | - | - | - |
| | Kurepeet Dough | | - | - | 81.0 | 42 | 1.71 | 4.99 | 43 | 1.7 |
| | Kurepeet | | - | - | 85.0 | 85 | 0.18 | - | - | - |
| | Neo Snugger | | - | - | 106.0 | 37 | -0.65 · | - | 28 | 1.7 |

EP 0 358 195 A2

Example 27

The same photopolymerization procedure as in Example 1 was repeated (irradiation time : 10 minutes) except that the fluorine-containing polymer and the acrylic monomer listed in Table 4 were used in the listed mixing ratio (by weight). The solid high polymer substance obatined was tested for Vickers hardness (Hv) and Shore hardness (A). The Vickers hardness was determined with use of Micro Hardness Tester, Type M, product of Shimadzu Seisakusho Ltd., by placing a 100-gram weight on a diamond press member for 10 seconds to form a mark of the press member on the surface of the sample and calculating the hardness from the size of the mark. The Shore hardness was measured by the method described above.

Table 4

| Dai-el G801 | Acrylic monomer | | | Vickers (Hv) | Shore (A) |
|---|---|---|---|---|---|
| | MMA | BMA | 5FMA | | |
| 0.8 | 0.2 | | | 0.59 | 93 |
| 0.7 | 0.3 | | | 9.22 | |
| 0.6 | 0.4 | | | 11.6 | |
| 0.5 | 0.5 | | | 13.1 | |
| 0.8 | | 0.2 | | | 56 |
| 0.67 | | 0.33 | | 0.06 | 74 |
| 0.5 | | 0.5 | | 0.27 | 89 |
| 0.77 | | | 0.23 | | 47 |
| 0.72 | | | 0.28 | | 52 |
| 0.68 | | | 0.32 | | 62 |
| 1.0 | | | | | 45 |
| | 1.0 | | | 20.0 | |

Example 28

The same photopolymerization procedure as in Example 1 was repeated (irradiation time : 10 minutes) except that the fluorine-containing polymer and the acrylic monomer listed in Table 4 were used in the listed mixing ratio (by weight). The solid high polymer substance obtained was tested for Vickers hardness (Hv) and Shore hardness (A).

Table 5

| Dai-el G801 | Acrylic monomer | | | Vickers (Hv) | Shore (A) |
|---|---|---|---|---|---|
| | MMA | BMA | 5FMA | | |
| 0.8 | 0.2 | | | 0.68 | 95 |
| 0.7 | 0.3 | | | 8.27 | |
| 0.8 | 0.4 | | | 11.6 | |
| 0.5 | 0.5 | | | 14.0 | |
| 0.8 | | 0.2 | | 0.03 | 88 |
| 0.67 | | 0.33 | | 3.91 | |
| 0.5 | | 0.5 | | 8.82 | |
| 0.8 | | | 0.2 | | 58 |
| 0.67 | | | 0.33 | | 75 |
| 0.5 | | | 0.5 | | 89 |
| Kurepeet Dough | | | | | 40 |
| Neo Snugger | | | | | 37 |

Examples 29 to 32

Solid high polymer substances were prepared in the same manner as in Examples 17 to 26 with the exception of using the fluorine-containing polymer and the monomer listed in Table 6. The new symbols in the table represent the following.

4FFA : $CH_2 = CFCOOCH_2CF_2CF_2H$

8FFA : $CH_2 = CFCOOCH_2(CF_2)_3CF_2H$

Table 6

| Ex. | Polymer | Monomer | Contact angle (degree) | Shore (A) |
|---|---|---|---|---|
| 29 | G801 | 4FFA | 90 | 64 |
| 30 | G901 | 4FFA | 89 | 52 |
| 31 | G801 | 8FFA | 93 | 58 |
| 32 | G901 | 8FFA | 93 | 43 |

Some of the solid high polymer substances of the invention were tested for cytotoxicity by the method disclosed in "Jinko Zoki (Artificial Organs)," Vol.9, p.919 (1980), i.e., by preparing a sheet from the polymer substance and incubating on the sheet an epithelial cell line, Ca.9.22, derived from human gingiva cancer to determine the cell proliferation rate. The results are given in Table 7, which shows that the relative rate determined for each substance is about 1, hence no toxicity.

Table 7

| Polymer | Monomer | Relative proliferation rate |
|---------|---------|-----------------------------|
| G801    | MMA     | 1.20                        |
| G801    | 5FMA    | 0.98                        |
| G901    | 8FFA    | 1.38                        |

Example 33

To 2g of a fluorine-containing polymer (Dai-el® G801) and 1g of 5FMA were added CQ and DM AEMA each in an amount of 0.2% based on 5FMA. The mixture was polymerized with use of α-light at room temperature for a time listed in Table 8. The characteristics of the solid high polymer substance obtained were determined by the following methods.

(1) Tensile strength at break

Measured according to JIS K 6301 using an autograph, product of Shimadzu Seisakusho Ltd., with use of dumbbell specimen (No.2) at a drawing speed of 100mm /min.

(2) Modulus of elasticity

Measured using a Vibron, product of Orientee Co., Ltd.

Example 34

To 2g of fluorine-containing rubber (Dai-el® G801) and 1g of 5FMA were added CQ and DMAEM A in amounts listed in Table 9 and the mixture was subjected to polymerization with use of α-light at room temperature for 10 minutes.

The characteristics of the obtained solid high polymer substance were determined in the same manner as in Example 33. The results were given in Table 9.

Table 9

| Irradiation time | $T_B$ (kg/cm²) | Modulus of elasticity (dyne/cm²) |
|------------------|----------------|----------------------------------|
| 3 min            | 3.77           | $2.47 \times 10^8$               |
| 5 min            | 23.94          | $2.51 \times 10^8$               |
| 10 min           | 32.22          | $2.61 \times 10^8$               |
| 20 min           | 36.79          | $3.19 \times 10^8$               |
| 30 min           | 39.33          | $3.63 \times 10^8$               |

Table 10

| CQ (%) | DMAEMA (%) | $T_B$ (kg/cm$^2$) | Modulus of elasticity (dyne/cm$^2$) |
|---|---|---|---|
| 0.05 | 0.05 | 26.45 | $3.07 \times 10^8$ |
| 0.1 | 0.1 | 20.18 | $2.60 \times 10^8$ |
| 0.2 | 0.2 | 16.04 | $2.42 \times 10^8$ |
| 0.5 | 0.5 | 15.90 | $2.20 \times 10^8$ |
| 1.0 | 1.0 | 20.18 | $2.09 \times 10^8$ |

Example 35

In MMA having dissolved therein CQ and DM AEMA each in an amount of 0.5wt% was immersed 20g of fluorine-containing polymer (Dai-el® G801) which was crosslinked by the conventional method to impregnate 10g of the monomer into the polymer. The monomer was polymerized with irradiation of visible ray at room temperature for 10 minutes. The obtained solid high polymer was checked for modulus of elasticity using a Vibron, product of Orientec Co., Ltd., at a temperature elevation speed of 2°C/min, and frequency of 3.5Hz. The results were given in Table 10.

Table 10

| Temp (°C) | Modulus of elasticity (dyne/cm$^2$) |
|---|---|
| -100 | $3.0 \times 10^{10}$ |
| -50 | $2.8 \times 10^{10}$ |
| 0 | $2.25 \times 10^{10}$ |
| 50 | $1.6 \times 10^{10}$ |
| 100 | $2.0 \times 10^9$ |
| 150 | $9.3 \times 10^7$ |
| 200 | $1.07 \times 10^8$ |
| 250 | $1.20 \times 10^8$ |

Example 36

In a mixture of 0.98g of MMA and 0.02g of ethylene glycol dimethacrylate (1 G) was dissolved 2g of fluorine-containing polymer (Dai-el® G801). Thereto were added CQ and DMAEMA each in an amount of 0.5wt% and the monomers were polymerized with use of α-light at room temperature for 10 minutes.

Tensile strength at break of the obtained solid high polymer substance was 530kgf/cm$^2$.

Example 37

Ten gram of MMA containing 2% of 1 G was impregnated into 20g of fluorine-containing polymer (Dai-el® G801) which was crosslinked by the conventional method. Thereto were added CQ and DMAEMA each in an amount of 0.5wt% and the monomers were polymerized with use of visible ray at room temperature for 10 minutes.

11

## Example 38

The polymerization was conducted in the same manner as in Example 35 with the exception of using 10g of Dai-el® G801 and 20g of MMA. The obtained solid high polymer substance was checked for modulus of elasticity and the results were shown in Table 11.

## Example 39

The polymerization was conducted in the same manner as in Example 38 except that 15g of MMA and 5g of 1 G were used in place of 20g of MMA. The obtained solid high polymer substance was checked for modulus of elasticity and the results were shown in Table 11.

Table 11

| Temp ($^\circ$C) | Modulus of elasticity (dyne/cm$^2$) | |
|---|---|---|
| | Ex. 38 | Ex. 39 |
| -100 | $3.0 \times 10^{10}$ | $3.4 \times 10^{10}$ |
| -50 | $2.8 \times 10^{10}$ | $2.8 \times 10^{10}$ |
| 0 | $2.3 \times 10^{10}$ | $2.4 \times 10^{10}$ |
| 50 | $1.6 \times 10^{10}$ | $1.75 \times 10^{10}$ |
| 100 | $2.0 \times 10^{9}$ | $6.8 \times 10^{8}$ |
| 150 | $9.7 \times 10^{7}$ | $1.8 \times 10^{9}$ |
| 200 | $1.1 \times 10^{8}$ | $6.0 \times 10^{8}$ |

## Example 40

In a monomer mixture of 9.9g of MMA and 0.1g of 1 G were dissolved CQ and DMAEMA each in an amount of 0.5wt%. Thereto were dissolved 20g of Dai-el® G801, 0.5wt% of Perhexa 2.5B [Nippon Oil & Fats Co., Ltd., 2,5-dimethyl-2,5-di(tertbutylperoxy)hexane] and 0.2wt% of triallyl isocyanurate (TAIC) each based on G801 to obtain a homogeneous solution. The monomers wer photopolymerized with irradiation of visible ray and the resulting substance was heat-treated at 160$^\circ$C for 10 minutes for crosslinking.

The obtained high polymer substance was 10.01HV (25$^\circ$C) in Vickers hardness. The substance was checked for modulus of elasticity (E$^{'}$) using a Vibron, product of Orientec Co., Ltd., at a temperature elevation speed of 2$^\circ$C/min, and frequency of 3.5Hz. The results wer given in Table 12.

Table 12

| Temp ($^\circ$C) | tan $\delta$ | E$^{'}$ (dyne/cm$^2$) |
|---|---|---|
| -50 | 0.023 | $2.60 \times 10^{10}$ |
| -25 | 0.027 | $2.20 \times 10^{10}$ |
| 0 | 0.039 | $1.82 \times 10^{10}$ |
| 25 | 0.079 | $1.42 \times 10^{10}$ |
| 50 | 0.49 | $0.47 \times 10^{10}$ |
| 68 | 1.32 | $0.50 \times 10^{9}$ |
| 75 | 1.18 | $0.47 \times 10^{9}$ |
| 100 | 0.60 | $0.54 \times 10^{9}$ |

## Example 41

To Dai-el® G801 were added and mixed 4wt% of TAIC and 1.5wt% of Perhexa 2.5B based on G801 and the mixture was heat-treated at 160°C for 10 minutes to obtain crosslinked G801. To 45 parts of MMA having dissolved therein each 0.5wt% of CQ and DMAE MA was immersed 55 parts of the above crosslinked G801 and the monomer was photopolymerized in the same manner as in Example 40.

The obtained high polyemr substance was checked for tanδ and E' in the same manner as in Example 40 and the results were given in Table 13.

Table 13

| Temp (°C) | tan δ | E' (dyne/cm$^2$) |
|---|---|---|
| -100 | 0.04 | $3 \times 10^{10}$ |
| -50 | 0.04 | $2.6 \times 10^{10}$ |
| 0 | 0.07 | $1.95 \times 10^{10}$ |
| 50 | 0.09 | $1.2 \times 10^{10}$ |
| 100 | 0.98 | $4.3 \times 10^8$ |
| 105 | 1.1 | $2 \times 10^8$ |
| 150 | 0.4 | $1.2 \times 10^8$ |
| 200 | 0.18 | $1.3 \times 10^8$ |

## Example 42

Into an autoclave equipped with a stirrer and jacket for adjusting temperature were placed 1.5 liter of distilled water and 3.0g of ammonium perfluorooctanate. After the air in the autoclave was replaced by nitrogen, 100g of a monomer mixture of vinylidene fluoride/chlorolrifluoroethylene (55/45 in mole %) was added. Thereto was added 50mg of ammonium persulfate with stirring at 70°C to commence the reaction. The monomers were continuously added and the reaction was terminated by cooling when 300g of the monomers was consumed. The reaction product was obtained in the form of a latex. The latex was coagulated and the resulting polymer was separated, washed with water and dried by vacuum to obtain an elastomer in the form of a bulk.

In 20g of MMA having dissolved therein each 0.06g of CQ and DMAEMA was homogeneously dissolved 20g of the above elastomer. The monomer was polymerized with irradiation of visible ray at room temperature for 10 minutes.

## Example 43

In 63 parts of 5 FMA was dissolved 37 parts of a copolymer of tetrafluoroethylene-propylene (60/40) and the monomer was subjected to heat polymerization by the method below. Namely, to the solution was added 0.5 wt% of azobisisobutyronitrile (AIBN) based on the monomer and the mixture was polymerized at 60°C for 2 hours and then at 80°C for one hour.

The obtained high polymer substance was 1.6HV (25°C) in Vickers hardness. The tensile strength of the substance was found to be 215kgf/cm$^2$ by using an autograph of Shimadzu Seisakusho Ltd. at a drawing speed of 100mm/min. and dumbbell specimen (No.2.). Further, tanδ and E' were measured similarly and the results were shown in Table 14.

13

Table 14

| Temp ($^\circ$C) | tan $\delta$ | E` (dyne/cm$^2$) |
|---|---|---|
| -50 | 0.007 | $2.25 \times 10^{10}$ |
| -25 | 0.010 | $1.95 \times 10^{10}$ |
| 0 | 0.072 | $1.32 \times 10^{10}$ |
| 10 | 0.360 | $4.0 \times 10^{8}$ |
| 25 | 0.143 | $1.85 \times 10^{8}$ |
| 50 | 0.210 | $1.3 \times 10^{9}$ |

## Example 44

In a monomer mixture of 50 parts of 5 FMA and 17 parts of EDMA was dissolved 33 parts of a copolymer of tetrafluoroethylene-propylene (60/40) and the monomers were subjected to heat polymerization in the same manner as in Example 43.

The resulting high polymer substance was 2.7HV (25$^\circ$C) in Vickers hardness and 231kgf/cm$^2$ in tensile strength. Further, tan$\delta$ and E$'$ were shown in Table 15.

Table 15

| Temp ($^\circ$C) | tan $\delta$ | E` (dyne/cm$^2$) |
|---|---|---|
| -50 | 0.020 | $2.0 \times 10^{10}$ |
| -25 | 0.027 | $1.88 \times 10^{10}$ |
| 0 | 0.055 | $1.70 \times 10^{10}$ |
| 7.5 | 0.134 | $1.22 \times 10^{10}$ |
| 25 | 0.082 | $0.74 \times 10^{10}$ |
| 50 | 0.087 | $0.53 \times 10^{10}$ |
| 75 | 0.130 | $0.37 \times 10^{10}$ |
| 90 | 0.300 | $0.03 \times 10^{10}$ |

## Application example 1

The substance was used for a full denture which caused inflammation to the tunica mucosa oris on the upper jaw due to impaired fitness. The inflammation inducing portion of the denture base was cut away to a depth of 1.5 to 2.0mm. The membrane surface of the denture base upper jaw portion was then entirely cleaned and thoroughly dried, and the rubberlike high polymer substance of the invention was affixed to the entire surface while stretching the substance with fingers. The denture was then placed into the mouth cavity of the patient, held in occlusal relation for several minutes and taken out. the excessive portion of the substance was removed, and the denture was placed into the mouth cavity again. The denture was set in place with remarkably improved fitness.

## Claims

1. A solid high polymer substance obtained by dissolving in an acrylic monomer an amorphous fluorine-containing polymer soluble in the acrylic monomer, and subsequently subjecting the monomer to polymerization, or further forming an interpenetrating polymer network.

2. A substance as defined in claim 1 wherein the amorphous fluorine-containing polymer is a vinylidene fluoride type copolymer, tetrafluoroethylene/propylene, hexafluoropropylene/ethylene, fluoro(alkyl vinyl ether)/olefin type copolymer, fluorosilicon type polymer or fluorophosphazene type polymer.

3. A substance as defined in claim 2 wherein the vinylidene fluoride type copolymer is that having an iodine atom or bromine atom bonded to the polymer chain thereof.

4. A process for preparing a solid high polymer substance which comprises dissolving in an acrylic monomer an amorphous fluorine-containing polymer soluble in the acrylic monomer, and subsequently subjecting the monomer to polymerization, or further forming an interpenetrating polymer network.

5. A dental base material obtained from a solid high polymer substance claimed in any one of claims 1 to 3.

6. A molding material obtained from a solid high polymer substance claimed in any one of claims 1 to 3.

Fig. 1

Temp (°C)